# EUROPEAN PATENT SPECIFICATION

(11) **EP 2 939 888 B1**
(45) Date of publication and mention of the grant of the patent: **22.11.2017**
(21) Application number: 13868241.4
(22) Date of filing: 23.04.2013
(51) Int. Cl.: B60T 7/06, B60R 21/09, G05G 1/327

(54) **PEDAL ASSEMBLY FOR VEHICLES**
PEDALBAUGRUPPE FÜR FAHRZEUGE
ENSEMBLE PÉDALE POUR VÉHICULES

(30) Priority: 26.12.2012 ES 201232022
(43) Date of publication of application: 04.11.2015
(73) Proprietor: Teknia Manresa, S.L.U., 08243 Manresa Barcelona (ES)
(72) Inventor: MATA CAMPOS, Luis Fernando, E-23600 Martos (Jaén) (ES); GARCÍA COLLADO, Alberto José, E-23600 Martos (Jaén) (ES)
(74) Representative: Capitán García, Maria Nuria
(86) International application number: PCT/ES2013/070260
(87) International publication number: WO 2014/102410

(56) References cited:
- WO-A1-2012/066412
- GB-A- 2 353 009
- GB-A- 2 389 083
- JP-A- 2006 160 150
- JP-A- 2007 140 874
- JP-A- 2008 090 381
- US-A1- 2005 056 115

## Description

### OBJECT OF THE INVENTION

The present invention relates to a vehicle pedal assembly comprising a pedal and a support, such that the pedal is released from its attachment so that in case of frontal collision of the vehicle the pedal will be placed at the lowest and forward-most position possible with respect to the passenger cab and the vehicle occupants, thereby preventing the entry of the pedal in said cab with the ensuing risk of injury to the occupants.

### BACKGROUND OF THE INVENTION

Normally when a vehicle suffers a considerably strong frontal impact the engine compartment and front wheel attempt to enter the foot well, pushing back the front wall and reducing the volume thereof. In this process the pedal assemblies mounted on the front of said cab are also pushed back and can cause injury to the lower part of the legs or the ankle.

JP 2006 160150 A discloses a vehicle pedal set according to the preamble of claim 1. The present invention is proposed as an alternative to the prior art, to prevent the penetration of the pedal assembly in the cab from being dangerous and thereby eliminate or reduce injuries, gaining space by releasing the pedal shaft from the attachment thereof such that it is free to slide, allowing the pedal to be placed at the lowest and forward-most position possible with a negligible effort.

### DESCRIPTION OF THE INVENTION

The present invention is established and characterised in the independent claims, while the dependent claims describe additional characteristics thereof.

In view of the foregoing, the present invention relates to a vehicle pedal assembly meant to prevent the penetration in the cab thereof which would injure the occupants. To achieve this goal the problem of releasing the pedal from its attachment such that the pedal is moved to its lowest and forward-most position possible is solved.

In this description the spatial references of right, left, forward, rear, back and the like refer to those commonly used in vehicles, in view of a person sitting at the vehicle controls looking in the direction of motion of the same.

The pedal assembly comprises a support with two connected side walls that have an opening between them, a pedal (either the brake or clutch) running through the opening and hinged to the support by a shaft the ends of which are attached to said support, and a recovery spring acting on said pedal. The recovery spring allows the pedal to remain in its upper position and return after a load is applied when stepping on it.

Said pedal assembly is characterised in that it also comprises a lever, also hinged at the shaft, comprising a crossbar and two legs connected to the ends thereof, said legs each having an orifice in which the corresponding ends of the shaft are inserted, the lever also comprises at least two openings; the support has a horizontal slit at each side wall in correspondence with the ends of the shaft, such that the width of each horizontal slit houses said ends of the shaft; plates are attached to the support by at least two tabs that cross the side wall of the support through corresponding openings and enter the openings made in the lever, said plates being arranged at the front ends of the slits, each plate having a supporting side face on which rests the shaft, and between the support and each plate is placed an ejection spring that exerts pressure between the support and each plate.

When a frontal collision occurs and the vehicle foot well begins to penetrate towards the cab, some parts of the vehicle that are less rigid move less than the foot well, such as the cross car beam. Thus, the lever contacts said cross car beam, turning and breaking the tab that is introduced during the opening thereof and crossing the side wall of the support. In this way, the plates are projected by the action of the curved spring and no longer support the shaft at the rear part thereof, which can then move along the grooves of the support such that the pedal falls to the lowest and forward most position in the foot well within the cab.

The advantage is that the invention provides in a simple and effortless manner, that is, without energy expenditure, a safety device to prevent the entry of the pedals in the cab in case of a frontal collision.

### DESCRIPTION OF THE DRAWINGS

This specification is supplemented with a set of drawings illustrating the preferred embodiment, which are never intended to limit the invention.

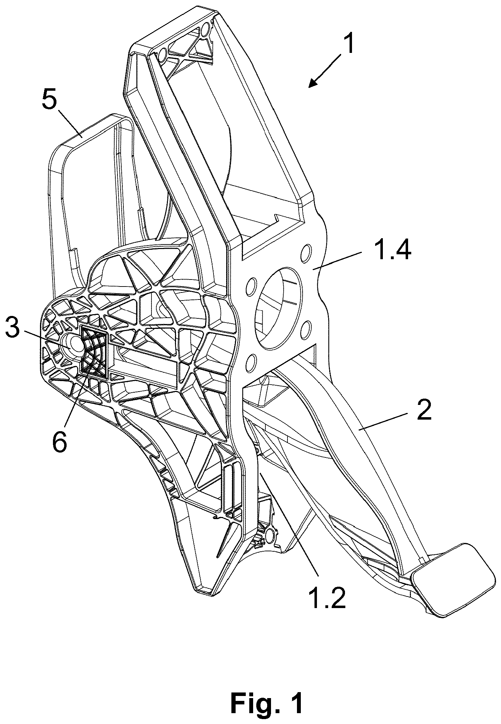

Figure 1 shows a perspective view from the part facing the inside of the cab of a preferred embodiment of the invention.

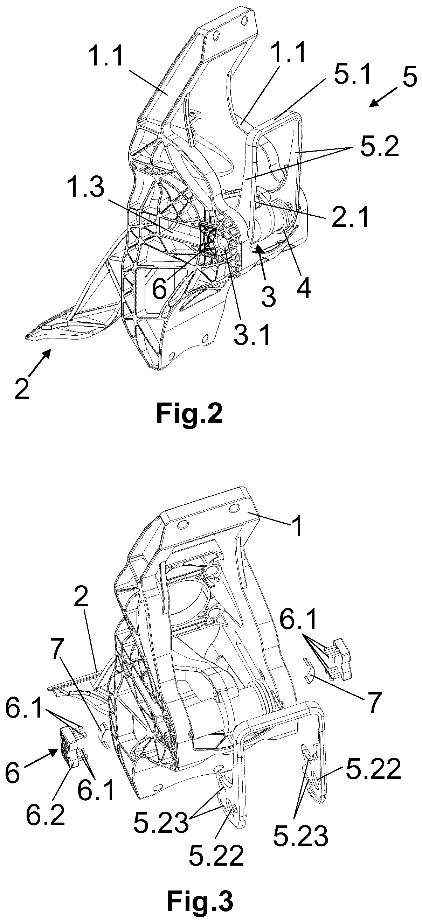

Figure 2 shows a perspective view from the part opposite to that of figure 1 a preferred embodiment of the invention.
Figure 3 shows an exploded view of some parts according to the view of figure 2.

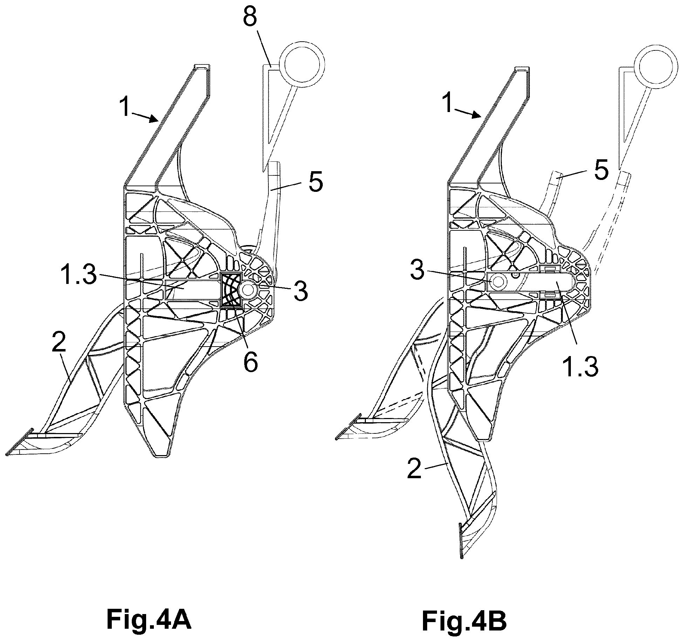

Figures 4A and 4B show a side view of the preferred embodiment of the invention before and after a collision, showing in a broken line in figure 4B the position of figure 4A.

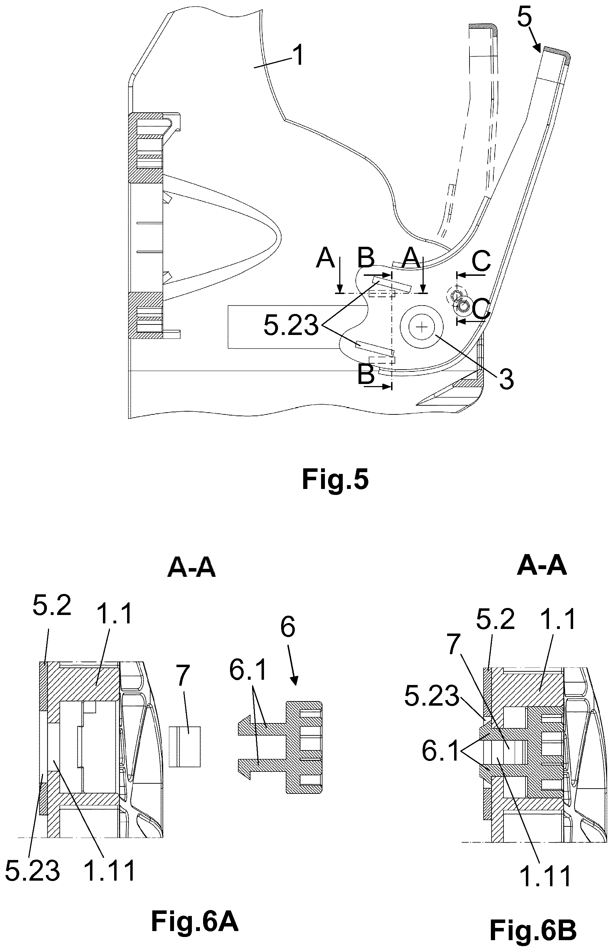

Figure 5 shows a side view of the lever of the preferred embodiment of the invention after a collision, showing in a broken line the position of the lever before the collision.

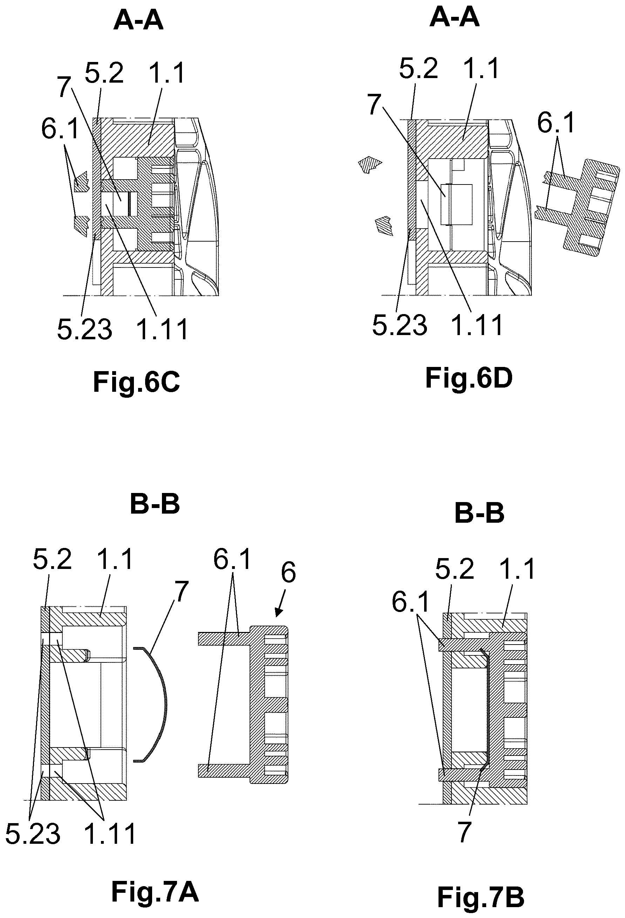

Figures 6A, 6B, 6C and 6D show details of the A-A cross section indicated in figure 5 for a plate of the preferred embodiment of the invention in an exploded view, before a collision, with the tabs broken after a collision, and ejected by the action of an ejection spring, respectively.

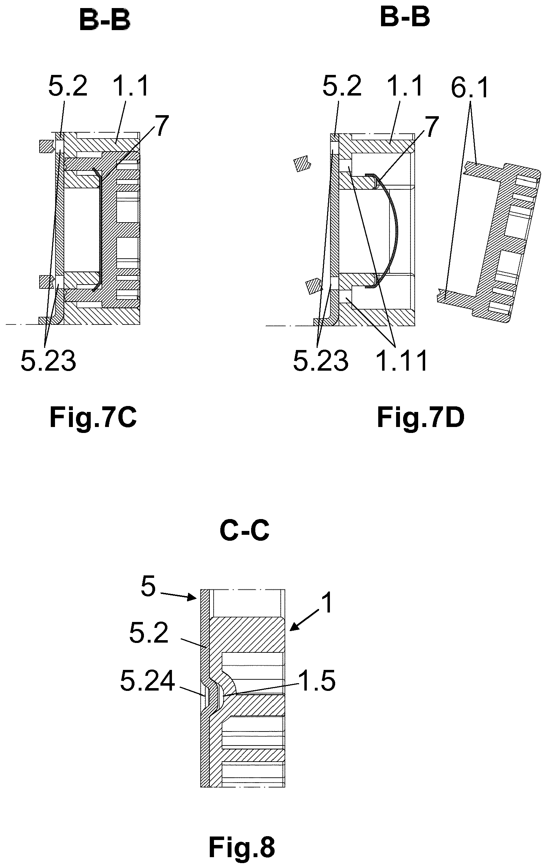

Figures 7A, 7B, 7C and 7D are similar representations to figures 6A to 6D along the longitudinal section B-B indicated in figure 5 of a plate.
Figure 8 shows an enlarged representation of a recess of the plate along the C-C section indicated in figure 5.

### PREFERRED EMBODIMENT OF THE INVENTION

In view of the foregoing, a preferred embodiment is described below relating to a vehicle pedal set comprising a support (1) with two side walls(1.1) connected to each other leaving an opening (1.2) between them. A crossbar in the form of a flanging joint surface (1.4) can connect them, on which is attached a master cylinder, not shown, of the brake or clutch.

A pedal (2) passing through the opening (1.2) and hinged on the support (1) by a shaft (3) the ends of which (3.1) are attached to said support (1). In this way the pedal (2) turns to push a rod in the master cylinder, not shown, which is anchored to the pedal (2), for example at an attachment point (2.1) located above the shaft (3).

A returns spring (4) that acts on said pedal (2), in the embodiment shown this is a spiral spring around the shaft (3) with one end attached to the pedal (2) and the other attached to the support (1).

A lever (5) also hinged to the shaft (3) that comprises a cross bar (5.1) and two legs (5.2) attached to the ends thereof, thereby forming a U in the embodiment shown. These legs each have an orifice (5.22) in which is introduced each end (3.1) of the shaft (3) and two openings (5.23), one on each side of the orifice (5.22). Thus, in the embodiment shown each leg (5.2) has an orifice (5.22) and two openings (5.23) on either side thereof with respect to a horizontal shaft that passes through the centre of the orifice (5.22).

The support (1) has a horizontal slit (1.3) on each side wall (1.1) and in correspondence with the ends of the shaft (3), such that the width of each horizontal slit (1.3) houses said ends (3.1) of the shaft (3). That is, the width allows the ends (3.1) of the shaft (3) to slide freely along said horizontal slits (1.1).

Plates (6) attached to the support (1) by tabs (6.1), in the embodiment two for each opening (5.23) of the lever (5) of the snap-fit type with a wedge on the ends thereof, the wedge of each tab facing outward.

These tabs (6.1) cross the side wall (1.1) of the support (1) through a window (1.11), one for each pair of tabs in this embodiment, and are inserted in corresponding openings (5.23) of the lever (5), also one for each pair of tabs (6.1).

The plates (6) are arranged at the front ends of the slits (1.1), having a side face (6.2) on which the shaft (3) is supported. In this embodiment said side face (6.2) includes a cylindrical seat with the same radius as the shaft (3), such that the latter rests on said seat.

To favour the ejection of each plate (6) an ejection spring (7) is provided that exerts a pressure between the support (1) and each plate (6). Thus, when the lever (5) turns and breaks the tabs (6.1) due to shearing, the plates (6) lose their attachment and are ejected out of their housing to clear the path for the ends (3.1) of the shaft (3) to move inside the slits (1.3) .

To prevent the involuntary rotation of the lever (5) when no collision has occurred, advantageously it is possible to establish on at least one of the legs (5.2) of the lever (5) a recess (5.24) that is inserted in the corresponding housing (1.5) provided in the support (1).

During the operation of the pedal assembly when there is a front collision, as described in a previous section, the lever contacts the cross car beam, which moves less than the foot well of the cab such that it contacts the cross bar (5.1) of the lever (5).

## Claims

1. Vehicle pedal set comprising a support(1)with two side walls (1.1) joined to each other leaving an opening (1.2) between them, a pedal (2) that moves through the opening (1.2) hinged on the support (1) by a shaft (3) the ends of which (3.1) are attached to said support (1), a return spring (4) that acts on said pedal (2), **characterised in that** it also comprises a lever that is also hinged on the shaft (3) which comprises a crossbar (5.1) and two legs (5.2) attached to the ends thereof, said legs each having an orifice (5.22) in which is inserted each end (3.1) of the shaft (3) and at least two openings (5.23), the support (1) presents a horizontal slit (1.3) on each side wall (1.1) and in correspondence with the ends of the shaft (3), such that the width of each horizontal slit (1.3) houses said ends (3.1) of the shaft (3), and plates (6) attached to the support (1) by at least two tabs (6.1) that cross the side wall (1.1) of the support (1) at corresponding windows (1.11) and are inserted in the openings (5.23) of the lever (5), said plates (6) arranged at the anterior ends of the slits (1.3), having a side supporting face (6.2) on which rests the shaft (3), and between the support (1) and each plate (6) is provided an ejection spring (7) that exerts pressure between the support (1) and each plate (6).

2. Pedal set according to claim 1 in which on either side of the orifice (5.22) of the lever (5) is placed an opening (5.23) in which is introduced the corresponding tab (6.2) of each plate (6).

3. Pedal set according to claim 2 in which in each opening (5.23) are inserted two tabs (6.2) of each plate (6) .

4. Pedal set according to claim 1 in which the side face (6.2) of each plate (6) includes a cylindrical seat with the same radius as the shaft (3) such that the latter rests on said seat.

5. Pedal set according to claim 1 in which at least one leg (5.2) of the lever (5) has a recess (5.24) that is introduced in the corresponding housing (1.5) made in the support (1) in order to prevent the involuntary rotation of the lever (5).

## Patentansprüche

1. Fahrzeugpedalsatz, umfassend einen Träger (1) mit zwei Seitenwänden (1.1), die so miteinander verbunden sind, dass eine Öffnung (1.2) zwischen ihnen frei bleibt, ein Pedal (2), das sich durch die Öffnung (1.2) bewegt und mittels einer Welle (3) drehbar am Träger (1) angebracht ist, deren Enden (3.1) am Träger (1) befestigt sind, eine Rückholfeder (4), die auf das Pedal (2) wirkt, **dadurch gekennzeichnet, dass** er außerdem einen Hebel umfasst, der ebenfalls drehbar an der Welle (3) angebracht ist und eine Querstange (5.1) sowie zwei an deren Enden befestigte Arme (5.2) umfasst, wobei die Arme jeweils eine Öffnung (5.22), in die jeweils ein Ende (3.1) der Welle (3) eingeführt ist, und zumindest zwei Öffnungen (5.23) aufweisen, der Träger (1) einen horizontalen Spalt (1.3) an jeder Seitenwand (1.1) mit den Enden der Welle (3) übereinstimmend, sodass die Breite jedes horizontalen Spalts (1.3) eines der Enden (3.1) der Welle (3) aufnimmt, und Platten (6)aufweist, die durch zumindest zwei Stifte (6.1) am Träger (1) befestigt sind, die an entsprechenden Fenstern (1.11) die Seitenwand (1.1) des Trägers (1) durchqueren und in die Öffnungen (5.23) des Hebels (5) eingeführt sind, wobei die Platten (6), die an den vorderen Enden der Spalte (1.3) angeordnet sind, eine Seitenstützfläche (6.2) aufweisen, auf der die Welle (3) aufliegt, und zwischen dem Träger (1) und jeder Platte (6) ist eine Auswerferfeder (7) bereitgestellt, die Druck zwischen dem Träger (1) und jeder Platte (6) ausübt.

2. Pedalsatz nach Anspruch 1, wobei auf beiden Seiten der Öffnung (5.22) des Hebels (5) eine Öffnung (5.23) positioniert ist, in die der entsprechende Stift (6.2) jeder Platte (6) eingeführt ist.

3. Pedalsatz nach Anspruch 2, wobei in jede Öffnung (5.23) zwei Stifte (6.2) jeder Platte (6) eingeführt sind.

4. Pedalsatz nach Anspruch 1, wobei die Seitenfläche (6.2) jeder Platte (6) eine zylindrische Auflage mit dem gleichen Radius wie die Welle (3) aufweist, sodass Letztere auf der Auflage aufliegt.

5. Pedalsatz nach Anspruch 1, wobei zumindest ein Arm (5.2) des Hebels (5) eine Aussparung (5.24) aufweist, die in das entsprechende Gehäuse (1.5) eingeführt ist, das im Träger (1) ausgebildet ist, um eine ungewollte Drehung des Hebels (5) zu verhindern.

## Revendications

1. Ensemble pédale pour véhicule, comprenant un support (1) avec deux parois latérales (1.1) reliées l'une à l'autre en laissant une ouverture (1.2) entre elles, une pédale (2) qui se déplace à travers l'ouverture (1.2) articulée sur le support (1) par un arbre (3), dont les extrémités (3.1) sont fixées audit support (1), un ressort de rappel (4) qui agit sur ladite pédale (2), **caractérisé en ce qu'**il comprend également un levier qui est également articulé sur l'arbre (3) qui comprend une barre transversale (5.1) et deux montants (5.2) fixés aux extrémités de celle-ci, lesdits montants ayant chacun un orifice (5.22) dans lequel est insérée chaque extrémité (3.1) de l'arbre (3) et au moins deux ouvertures (5.23), le support (1) présente une fente horizontale (1.3) sur chaque paroi latérale (1.1) et en correspondance avec les extrémités de l'arbre (3), de sorte que la largeur de chaque fente horizontale (1.3) loge lesdites extrémités (3.1) de l'arbre (3) et des plaques (6) fixées au support (1) par au moins deux languettes (6.1) qui croisent la paroi latérale (1.1) du support (1) au niveau de fenêtres correspondantes (1.11) et sont insérées dans les ouvertures (5.23) du levier (5), lesdites plaques (6) étant disposées au niveau des extrémités antérieures des fentes (1.3), ayant une face de support latérale (6.2) sur laquelle repose l'arbre (3) et, entre le support (1) et chaque plaque (6) se trouve un ressort d'éjection (7) qui exerce une pression entre le support (1) et chaque plaque (6).

2. Ensemble pédale selon la revendication 1, dans lequel, de chaque côté de l'orifice (5.22) du levier (5), est placée une ouverture (5.23) dans laquelle est introduite la languette correspondante (6.2) de chaque plaque (6).

3. Ensemble pédale selon la revendication 2, dans lequel, dans chaque ouverture (5.23) sont insérées deux languettes (6.2) de chaque plaque (6).

4. Ensemble pédale selon la revendication 1, dans lequel la face latérale (6.2) de chaque plaque (6) comprend un siège cylindrique avec le même rayon que l'arbre (3), de sorte que ce dernier repose sur ledit siège.

5. Ensemble pédale selon la revendication 1, dans lequel au moins un montant (5.2) du levier (5) présente un évidement (5.24) qui est introduit dans le boîtier correspondant (1.5) réalisé dans le support (1) afin d'empêcher la rotation involontaire du levier (5).
